# EUROPÄISCHE PATENTANMELDUNG

(11) **EP 4 446 166 A1**
(43) Veröffentlichungstag der Anmeldung: **16.10.2024**
(21) Anmeldenummer: 24168720.1
(22) Anmeldetag: 05.04.2024
(51) Int. Cl.: B60P 1/52, B65D 19/42

(54) **TRANSPORTVORRICHTUNG ZUM TRANSPORT VON PAKETEN**

(30) Priorität: 14.04.2023 DE 102023109499
(71) Anmelder: Fahrzeugwerk Bernard Krone GmbH & Co. KG, 49757 Werlte (DE)
(72) Erfinder: Schulte, Christoph, 49774 Lähden (DE)
(74) Vertreter: Engelmann, Kristiana

(57) **Zusammenfassung**

Die Erfindung betrifft eine Transportvorrichtung (2) zum Transport von Paketen. Die Transportvorrichtung (2) weist einen Boden (4), zumindest eine erste Seitenwand (6), an der zumindest eine erste Zwischenbodenvorrichtung (8) angeordnet ist, die relativ zur ersten Seitenwand (6) um eine vom Boden (4) beabstandete erste Schwenkachse (SA1) von einer Vertikalposition in eine Horizontalposition schwenkbeweglich ist und ein erstes Zwischenbodenelement (14) umfasst, und zumindest eine Rolleinrichtung (10), die mehrere relativ zum Boden (4) um Drehachsen (DA) drehbar gelagerte Rollelemente (12) zu einer Bewegung der Pakete in eine Rollrichtung (RR) umfasst, auf. Die erste Zwischenbodenvorrichtung (8) umfasst die Rolleinrichtung (10), sodass die Rolleinrichtung (10) als Teil der ersten Zwischenbodenvorrichtung (8) von der Vertikalposition in die Horizontalposition schwenkbeweglich ist.

## Beschreibung

Die Erfindung betrifft eine Transportvorrichtung zum Transport von Paketen oder anderem Stückgut. Die Transportvorrichtung weist einen Boden und zumindest eine erste Seitenwand auf. An der ersten Seitenwand ist zumindest eine erste Zwischenbodenvorrichtung angeordnet. Die erste Zwischenbodenvorrichtung ist relativ zur ersten Seitenwand um eine vom Boden beabstandete erste Schwenkachse von einer Vertikalposition in eine Horizontalposition schwenkbeweglich. Die erste Zwischenbodenvorrichtung umfasst ein erstes Zwischenbodenelement. Die Transportvorrichtung weist zumindest eine Rolleinrichtung auf. Die Rolleinrichtung umfasst mehrere relativ zum Boden um Drehachsen drehbar gelagerte Rollelemente zu einer Bewegung der Pakete in eine Rollrichtung.

Eine derartige Transportvorrichtung ist in unterschiedlichen Varianten bekannt. Die erste Zwischenbodenvorrichtung dient zur Ausbildung eines Zwischenbodens zu einer Unterteilung eines Laderaumes der Transportvorrichtung in übereinander angeordnete Laderaumteile. Die Rolleinrichtung dient zur Erleichterung eines Einladens der Pakete in den Laderaum. In einer ersten Variante ist die Rolleinrichtung mittig an dem Boden fest montiert. In einer zweiten Variante ist die Rolleinrichtung während des Einladens auf der ersten Zwischenbodenvorrichtung in der Horizontalposition aufgelegt und wird nach dem Einladen andernorts innerhalb des Laderaumes verstaut. Nachteilig bei den bekannten Varianten der Transportvorrichtung ist jeweils, dass die Rolleinrichtung einen kostbaren Anteil des Laderaumes beansprucht. Bei der ersten Variante verhindert die Rolleinrichtung bei einer üblichen Transportvorrichtungsbreite gar die Platzierung von Europaletten auf den Boden. Die zweite Variante erfordert zusätzlich eine aufwendige Handhabung der Rolleinrichtung.

Aufgabe der vorliegenden Erfindung ist die Bereitstellung einer gattungsgemäßen Transportvorrichtung, mit der die vorbeschriebenen Nachteile vermieden werden.

Erfindungsgemäß umfasst die erste Zwischenbodenvorrichtung die Rolleinrichtung. Das bedeutet, dass die Rolleinrichtung als Teil der ersten Zwischenbodenvorrichtung von der Vertikalposition in die Horizontalposition schwenkbeweglich ist. In der Vertikalposition der ersten Zwischenbodenvorrichtung ist der Laderaum somit automatisch frei von der Rolleinrichtung. Die Rolleinrichtung ist insbesondere platzsparend in das erste Zwischenbodenelement integriert. In der Horizontalposition bildet die Rolleinrichtung bevorzugt den Zwischenboden mit aus und/oder übernimmt die Rolleinrichtung insbesondere abschnittsweise die tragende Funktion der ersten Zwischenbodenvorrichtung. In der Vertikalposition befindet sich die Rolleinrichtung bevorzugt unmittelbar an der Seitenwand, an der die erste Zwischenbodenvorrichtung ohnehin anliegt.

Bei der Transportvorrichtung handelt es sich insbesondere um einen Ladungsträger, der lösbar auf einem Trägerfahrzeug zu befestigen ist und durch das Trägerfahrzeug zu transportieren ist. Bei dem Trägerfahrzeug handelt es sich insbesondere um eine Zugmaschine oder einen Anhänger. Bei dem Ladungsträger handelt es sich insbesondere um einen Wechselbehälter oder Wechselkoffer, bevorzugt mit einer standardisierten Befestigungseinrichtung für das Trägerfahrzeug. Die Transportvorrichtung umfasst neben dem Boden und der ersten Seitenwand vorzugsweise ein dem Boden gegenüberliegendes Dach, eine der ersten Seitenwand gegenüberliegende weitere Seitenwand, eine Frontwand und eine Rückwand, die starr ausgebildet sind und/oder gemeinsam den Laderaum umschließen. Die Rückwand und/oder die Frontwand sind/ist insbesondere durch zumindest eine um eine vertikale oder eine horizontale Achse verschwenkbare Laderaumtür oder -bordwand oder durch ein Rolltor ausgebildet.

Der Laderaum hat insbesondere eine Höhe von mehr als 2 m, bevorzugt von mehr als 2,5 m. Sind mit der Transportvorrichtung Pakete zu transportieren, werden diese üblicherweise manuell durch Beladepersonal in die Transportvorrichtung eingeladen. Um den Laderaum möglichst vollständig zu nutzen, sind die Pakete möglichst bis zur Decke der Transportvorrichtung zu stapeln. Hierbei wird das Beladepersonal durch die zumindest eine erste Zwischenbodenvorrichtung insofern unterstützt, als sie in der Horizontalposition den Zwischenboden mit ausbildet, von dem aus das obere Ende des Laderaumes für das Beladepersonal leichter zu erreichen ist. Während des Beladens befindet sich die erste Zwischenbodenvorrichtung bevorzugt zunächst in der Vertikalposition, während ein unterer Teil des Laderaumes beladen wird. Anschließend wird die erste Zwischenbodenvorrichtung in die Horizontalposition verschwenkt, in der sie den unteren Teil des Laderaumes oberseitig begrenzt. Daraufhin wird ein oberer Teil des Laderaumes, den die erste Zwischenbodenvorrichtung in der Horizontalposition unterseitig begrenzt, beladen. Die erste Schwenkachse ist insbesondere mindestens 300 mm, bevorzugt mindestens 650 mm, und/oder höchstens 900 mm, bevorzugt höchstens 750 mm, oberhalb des Bodens angeordnet. Bei der ersten Schwenkachse handelt es sich wie auch bei den weiteren vor- und nachbeschriebenen Achsen um geometrische Achsen und nicht um körperliche Achsen.

Zwischen der ersten Seitenwand und der ersten Zwischenbodenvorrichtung ist insbesondere ein bevorzugt als Gleitlager ausgebildetes Schwenklager angeordnet. In der Vertikalposition erstreckt sich das erste Zwischenbodenelement, bevorzugt die gesamte erste Zwischenbodenvorrichtung, bevorzugt zumindest bei einer Betrachtung parallel zur ersten Schwenkachse hauptsächlich vertikal. In der Horizontalposition erstreckt sich das erste Zwischenbodenelement, bevorzugt die gesamte erste Zwischenbodenvorrichtung, zumindest bei gleicher Betrachtung bevorzugt hauptsächlich horizontal. Bei dem ersten Zwischenbodenelement handelt es sich insbesondere um eine starre Platte. Die Rolleinrichtung ist insbesondere in einer von dem ersten Zwischenbodenelement ausgebildeten und insbesondere durchgehenden Ausnehmung angeordnet. Die Ausnehmung ist insbesondere rechteckig ausgebildet.

Die Rollelemente sind insbesondere als um die Drehachsen drehbar gelagerte Rollen ausgebildet. Die Rollen zeichnen sich insbesondere dadurch aus, dass ihre axiale Erstreckung ihre radiale Erstreckung, jeweils bezogen auf die Drehachsen der Rollenelemente, übersteigt. Bevorzugt haben die Rollen eine zylindermantelförmige Außenfläche. Die Rollelemente sind insbesondere sämtlich in die Rollrichtung hintereinander angeordnet. Die Rollelemente sind relativ zum ersten Zwischenbodenelement vorzugsweise ausschließlich um die Drehachsen drehbar, insbesondere beweglich, und/oder haben sämtlich den gleichen Abstand von der ersten Schwenkachse. Die Drehachsen sind bevorzugt ortsfest relativ zum ersten Zwischenbodenelement angeordnet. Die Ausbildung der Rollelemente als Rollen hat den Vorteil, dass es zwischen den Paketen und den Rollelementen eine möglichst große Kontaktfläche gibt, durch die das Risiko einer Zerstörung der Pakete verringert wird.

Alternativ zur Ausbildung der Rollelemente als Rollen haben die Rollelemente bevorzugt eine andere geometrische Form und sind insbesondere als Kugeln ausgebildet. Die Rolleinrichtung ist in diesem Fall bevorzugt als Kugeltisch ausgebildet. In diesem Fall sind die Rollelemente bevorzugt derart gelagert, dass die Rollelemente in unterschiedliche Richtungen drehbar sind, u.a. um die Drehachsen. Die Rollelemente haben in diesem Fall zumindest teilweise unterschiedliche Abstände von der ersten Schwenkachse und sind in eine zur Rollrichtung rechtwinklige Richtung zumindest teilweise versetzt zueinander angeordnet. Die Ausbildung der Rollelemente als Kugeln hat den Vorteil, dass die Pakete sich durch die Rolleinrichtung in unterschiedliche Richtungen relativ zum ersten Zwischenbodenelement bewegen lassen.

Die Drehachsen der Rollelemente sind insbesondere parallel zueinander angeordnet. Benachbarte Rollelemente der Rolleinrichtung sind bevorzugt derart nah aneinander angeordnet, dass zwischen ihnen lediglich ein schmaler Spalt existiert. Die Rollrichtung ist insbesondere parallel zur Schwenkachse orientiert. Alternativ oder zusätzlich fällt die Rollrichtung vorzugsweise mit einer Längsrichtung der gesamten Transportvorrichtung zusammen und/oder ist parallel zum Boden orientiert. Die Rollelemente sind insbesondere frei drehbar gelagert. Die Rollelemente oder zumindest ein Rollkörper davon ist bevorzugt zumindest teilweise aus einem Kunststoff ausgebildet. Die Rolleinrichtung umfasst bevorzugt zumindest vier, fünf, sechs, acht, zehn oder zwölf oder mehr insbesondere als Rollen ausgebildete Rollelemente. Das erste Zwischenbodenelement umfasst bevorzugt zwei gleich ausgebildete und miteinander verbundene Zwischenbodenvorrichtungseinheiten, die je vier, fünf oder sechs Rollelemente der Rolleinrichtung aufweisen. Das erste Zwischenbodenelement, das bevorzugt von beiden Zwischenbodenvorrichtungseinheiten teilweise ausgebildet ist, hat bevorzugt eine Erstreckung von zumindest 500 mm, insbesondere von genau 804 mm, in die Rollrichtung.

Vorzugsweise unterscheidet sich ein Abstand der Rollelemente oder der Rolleinrichtung von einem ersten Ende des ersten Zwischenbodenelementes von einem Abstand der Rollelemente bzw. der Rolleinrichtung von einem zweiten Ende des ersten Zwischenbodenelementes. Das erste Ende ist von der ersten Schwenkachse abgewandt. Das zweite Ende ist der ersten Schwenkachse zugewandt. Der Abstand von dem zweiten Ende beträgt insbesondere ein Vielfaches des Abstandes vom ersten Ende. Das Schwenklager oder ein zum ersten Zwischenbodenelement ortsfester Teil davon wird dabei nicht als Bestandteil des ersten Zwischenbodenelementes betrachtet. Durch die unterschiedlichen Abstände wird erreicht, dass zumindest einerseits neben der Rolleinrichtung durch das erste Zwischenbodenelement ein in der Horizontalposition fester und damit sicherer Untergrund für das Beladepersonal auf dem Zwischenboden hergestellt ist.

Bevorzugt haben die Rollelemente der Rolleinrichtung eine parallel zu ihren Drehachsen gemessene Erstreckung, die höchstens 70%, bevorzugt höchstens 50%, einer auf die erste Schwenkachse bezogenen radialen Erstreckung des ersten Zwischenbodenelementes entspricht. Besonders bevorzugt sind die Rollelemente vollständig zwischen einer Zwischenbodenmittelebene und dem ersten Ende oder dem zweiten Ende angeordnet. Alternativ schneidet die Zwischenbodenmittelebene bevorzugt die Rollelemente. Die Zwischenbodenmittelebene ist dabei zur ersten Schwenkachse parallel und insbesondere in der Horizontalposition vertikal angeordnet. Die Zwischenbodenmittelebene schneidet das erste Zwischenbodenelement mittig zwischen dem ersten Ende und dem zweiten Ende. Durch diese Ausbildung der ersten Zwischenbodenvorrichtung wird sichergestellt, dass der sichere Untergrund für das Beladepersonal bei üblichen Größen der Transportvorrichtung ausreichend zur Verfügung steht.

Vorzugsweise haben die Drehachsen der insbesondere bezogen auf die Rollrichtung äußersten Rollelemente der Rolleinrichtung einen Abstand voneinander, der zumindest 50%, bevorzugt zumindest 70%, besonders bevorzugt zumindest 90% einer Erstreckung der ersten Zwischenbodenvorrichtung in die Rollrichtung entspricht. Mit den äußersten Rollelementen ist zum einen das in die Rollrichtung vorderste Rollelement und zum anderen das in die Rollrichtung hinterste Rollelement gemeint. Durch den beschriebenen Abstand der äußersten Rollelemente voneinander wird sichergestellt, dass die Rolleinrichtung sich in die Rollrichtung über einen so großen Teil der ersten Zwischenbodenvorrichtung erstreckt, dass die Pakete von den Rollelementen unterstützt einen signifikanten Weg in die Rollrichtung insbesondere bis auf eine in die Rollrichtung folgende Zwischenbodenvorrichtung zurücklegen können.

Vorzugsweise ist eine Oberfläche des ersten Zwischenbodenelementes, die in der Horizontalposition der ersten Zwischenbodenvorrichtung von dem Boden abgewandt ist, von einer Rollebene zumindest teilweise, insbesondere vollständig beabstandet. Die Rollebene berührt die Rollelemente insbesondere tangential an ihrer in der Horizontalposition der ersten Zwischenbodenvorrichtung von dem Boden abgewandten Seite. Die Rollebene schneidet insbesondere keines der Rollelemente der Rolleinrichtung. Die Rollebene erstreckt sich insbesondere parallel zu einer Oberfläche des Bodens. Die Oberfläche erstreckt sich insbesondere parallel zur Rollebene. Die Rollelemente stehen mit Bezug auf das erste Zwischenbodenelement also noch oben ab. Dadurch lässt sich ein sauberes Abrollen auch solcher Pakete sicherstellen, die seitlich über die Rollelemente überstehen. Der Abstand zwischen der Oberfläche des ersten Zwischenbodenelementes und der Rollebene beträgt bevorzugt zumindest 5 mm, besonders bevorzugt zumindest 10 mm, insbesondere zumindest im Wesentlichen 15 mm.

Bevorzugt weist die erste Zwischenbodenvorrichtung ein Abdeckelement auf. Das Abdeckelement erstreckt sich in der Horizontalposition der ersten Zwischenbodenvorrichtung zwischen zumindest einer der Rollen, insbesondere zwischen der Rolleinrichtung, und dem Boden. Durch das Abdeckelement werden die Rollelemente unabhängig in beiden Positionen der ersten Zwischenbodenvorrichtung gegen ein unbeabsichtigtes Einwirken der Pakete geschützt. In der Horizontalposition der ersten Zwischenbodenvorrichtung verhindert das Abdeckelement insbesondere einen eine Rotation blockierenden Kontakt des zumindest einen Rollelementes bzw. der Rolleinrichtung mit einem Paket im unteren Teil des Laderaumes.

Das Abdeckelement weist bevorzugt zumindest eine Ausnehmung auf, besonders bevorzugt weist des Abdeckelement mehrere Ausnehmungen auf. Die Ausnehmungen sind vorzugsweise in die Rollrichtung und/ oder quer dazu versetzt zueinander angeordnet. Die Ausnehmungen sind insbesondere angewinkelt zur Rollebene durchgängig. Die Ausnehmungen weisen insbesondere jeweils die Form eines Schlüsselloches auf. Das Abdeckelement ist insbesondere als Schlüssellochblech ausgebildet. Die Ausnehmungen dienen zur zuverlässigen Anordnung von Ladungssicherungselementen wie Spanngurten oder Sperrstangen an der ersten Zwischenbodenvorrichtung. Die zumindest eine Ausnehmung ist insbesondere durchgängig ausgebildet. Das Abdeckelement ist insbesondere als gelochte Platte oder als gelochtes Blech ausgebildet, das sich flächig zumindest im Wesentlichen parallel zum ersten Zwischenbodenelement erstreckt.

Bevorzugt weist zumindest eines der insbesondere als Rollen ausgebildeten Rollelemente der Rolleinrichtung zumindest ein Achselement auf. Besonders bevorzugt weist das Rollelement den Rollkörper auf, der insbesondere an die Rollebene angrenzt. Das Achselement ist vorzugsweise relativ zum Rollkörper parallel zur Drehachse des Rollelementes beweglich ausgebildet. Insbesondere ist das Achselement entgegen einer Federkraft beweglich, die bevorzugt von einer von dem Rollelement umfassten Feder erzeugt wird. Dadurch ist das Rollelement insofern werkzeuglos zu montieren, als das Achselement manuell gegen die Federkraft bewegt wird, das Rollelement dann in ihre Montageposition gebracht wird und das Achselement sich anschließend, verursacht durch die Federkraft, in eine Ausnehmung in dem ersten Zwischenbodenelement bewegt und darin durch die Federkraft verbleibt.

Alternativ oder zusätzlich ist das Achselement durch ein lösbar an dem ersten Zwischenbodenelement festgelegtes Befestigungselement relativ zum ersten Zwischenbodenelement befestigt. Das Rollelement weist bevorzugt den zum Achselement drehbaren Rollkörper auf, wobei zwischen dem Rollkörper und dem Achselement insbesondere ein Lager angeordnet ist. Alternativ ist der Rollkörper relativ zum Achselement unbeweglich ausgebildet, sodass zwischen dem Achselement und dem ersten Zwischenbodenelement bevorzugt ein Lager angeordnet ist. Das Achselement ist vorzugsweise eine durch den Rollkörper hindurchgehende Achse oder ein Achszapfen. Das Befestigungselement wirkt vorzugsweise in eine bezogen auf die Drehachse des zumindest einen Rollelementes radiale Richtung auf das Achselement ein. Bevorzugt umfasst die Rolleinrichtung pro Zwischenbodenvorrichtungseinheit genau ein Befestigungselement. Das Befestigungselement ist bevorzugt mit dem Zwischenbodenelement verschraubt. Ein von dem Befestigungselement abgewandtes Ende des Achselementes taucht insbesondere in eine dafür vorgesehene Ausnehmung in dem ersten Zwischenbodenelement ein. Hierdurch wird eine einfache und zuverlässige Montage und Lagerung des zumindest einen Rollelementes erreicht.

Die Rolleinrichtung umfasst vorzugsweise eine Bremseinrichtung. Die Bremseinrichtung ist insbesondere zu einer Bremsung und/oder zu einem Feststellen zumindest eines der Rollelemente der Rolleinrichtung ausgebildet. Bevorzugt setzt eine Bremswirkung der Bremseinrichtung in Abhängigkeit von einem Gewicht ein, das auf das Rollelement einwirkt. Alternativ setzt die Bremswirkung in Abhängigkeit von einem Weg ein, um den die Drehachse des Rollelementes insbesondere aufgrund des Gewichtes in eine zur Drehachse radiale Richtung bewegt wird. Dadurch lässt sich erreichen, dass die Rollelemente blockiert werden, sobald das Beladepersonal sie betritt, um Verletzungen des Beladepersonals zu vermeiden.

Das erste Zwischenbodenelement und/oder das Befestigungselement bilden/t bevorzugt eine Lagerausnehmung aus, in der das Achselement zumindest teilweise angeordnet ist. Die Lagerausnehmung ist besonders bevorzugt in eine zur Drehachse des zumindest einen Rollelementes angewinkelte Richtung offen, insbesondere zum Befestigungselement hin, ausgebildet. Dadurch kann das Achselement bei der Montage der Transportvorrichtung in die Lagerausnehmung eingelegt werden, bevor das Befestigungselement zur Befestigung des zumindest einen Rollelementes relativ zum Zwischenbodenelement, insbesondere unmittelbar daran, befestigt wird. Das Befestigungselement weist in einem zur Rollrichtung rechtwinkligen Querschnitt insbesondere einen ersten an dem Achselement anliegenden Schenkel und einen dazu angewinkelten zweiten Schenkel auf, der mit dem ersten Zwischenbodenelement verschraubt ist. Alternativ zur vorbeschriebenen Festlegung des zumindest einen Rollelementes an dem Zwischenbodenelement kann die Rolleinrichtung einen mehrere oder sämtliche ihrer Rollelemente zumindest in einer Ansicht vollständig umgebenden Rollenrahmen aufweisen, der in das Zwischenbodenelement ein- oder auf das Zwischenbodenelement aufzusetzen ist.

Vorzugsweise weist die Transportvorrichtung eine zweite Zwischenbodenvorrichtung auf, die relativ zur ersten Seitenwand um die erste Schwenkachse schwenkbeweglich ist, ein zweites Zwischenbodenelement umfasst, in die Rollrichtung versetzt zur ersten Zwischenbodenvorrichtung angeordnet ist und frei von Rollelementen ist. Die zweite Zwischenbodenvorrichtung dient zur Mitausbildung des Zwischenbodens. Insbesondere sind zwischen der ersten Zwischenbodenvorrichtung und der Frontwand der Transportvorrichtung mehrere zweite Zwischenbodenvorrichtungen in die Rollrichtung versetzt zueinander angeordnet. Das zweite Zwischenbodenelement ist bevorzugt derart ausgebildet, dass es abgesehen von der vorbeschriebenen Ausnehmung für die Rolleinrichtung dem ersten Zwischenbodenelement gleicht. Durch die zumindest eine zweite Zwischenbodenvorrichtung wird insbesondere im vorderen Bereich der Transportvorrichtung eine größere Standsicherheit sowohl für das Personal als auch für die in diesem Bereich insbesondere bei Bremsungen besonders hoch belasteten Pakete erreicht.

Die Transportvorrichtung weist bevorzugt zumindest eine weitere Zwischenbodenvorrichtung auf, die wie die erste Zwischenbodenvorrichtung ausgebildet ist und um die erste Schwenkachse von einer Vertikalposition in eine Horizontalposition schwenkbeweglich ist. Die weitere Zwischenbodenvorrichtung dient zur Mitausbildung des Zwischenbodens. Die weitere Zwischenbodenvorrichtung ist insbesondere entgegen der Rollrichtung zur ersten Zwischenbodenvorrichtung versetzt angeordnet. Die Transportvorrichtung weist insbesondere mehrere weitere Zwischenbodenvorrichtungen auf. Besonders bevorzugt übersteigt die Zahl der ersten und weiteren Zwischenbodenvorrichtungen die Zahl der zweiten Zwischenbodenvorrichtungen.

Vorzugsweise hat eine Drehachse eines der weiteren Zwischenbodenvorrichtung nächstliegenden Rollelementes der Rolleinrichtung der ersten Zwischenbodenvorrichtung von der einer Drehachse eines der ersten Zwischenbodenvorrichtung nächstliegenden Rollelementes einer Rolleinrichtung der weiteren Zwischenbodenvorrichtung höchstens einen Abstand, der weniger als 50%, bevorzugt weniger als 30%, besonders bevorzugt weniger als 20% des Abstandes der Drehachsen der äußersten Rollelemente der Rolleinrichtung der ersten Zwischenbodenvorrichtung entspricht. Das bedeutet, dass die Rolleinrichtungen der benachbarten und gleichartig ausgebildeten Zwischenbodenvorrichtungen gemeinsam eine zumindest weitgehend lückenlose Rollenbahn ausbilden, um die Pakete mittels der Rollelemente zuverlässig auch über längere Distanzen bewegen zu können, ohne das eine einzelne Zwischenbodenvorrichtung zu groß oder zu schwer wird, um sie manuell bewegen zu können. Insbesondere wird so das maximale Gewicht von 20 kg oder 25 kg berücksichtigt, dass das Beladepersonal anheben bzw. tragen darf.

Die Transportvorrichtung weist bevorzugt eine Gegenzwischenbodenvorrichtung auf, die an einer der ersten Seitenwand gegenüberliegenden weiteren Seitenwand angeordnet ist, zu der die Gegenzwischenbodenvorrichtung um eine weitere vom Boden beabstandete Schwenkachse von einer Vertikalposition in eine Horizontalposition schwenkbeweglich ist, und ein Gegenzwischenbodenelement umfasst. Das Gegenzwischenbodenelement und das erste Zwischenbodenelement werden insbesondere beide von einer zur Rollrichtung rechtwinkligen Querschnittsebene geschnitten, sind also bevorzugt nebeneinander angeordnet. Die Gegenzwischenbodenvorrichtung ist insbesondere frei von Rollelementen ausgebildet. Das Gegenzwischenbodenelement ist bevorzugt zumindest im Wesentlichen spiegelsymmetrisch und in die Rollrichtung versetzt zum zweiten Zwischenbodenelement ausgebildet.

Die Gegenzwischenbodenvorrichtung dient zu einer Vervollständigung des Zwischenbodens zwischen den Seitenwänden. Die erste Zwischenbodenvorrichtung hat insbesondere eine gleich große oder kleinere oder größere radiale Erstreckung von der ersten Schwenkachse wie/als die Gegenzwischenbodenvorrichtung von der weiteren Schwenkachse. Besonders bevorzugt ist dabei die Rolleinrichtung in der Horizontalposition der ersten Zwischenbodenvorrichtung mittig zwischen den Seitenwänden angeordnet. Hierdurch lassen sich die über die Rolleinrichtung bewegten Pakete gleichermaßen gut zur ersten wie zur weiteren Seitenwand verlagern.

Die Gegenzwischenbodenvorrichtung und/oder die ersten Zwischenbodenvorrichtung umfassen/umfasst vorzugsweise ein relativ zum Gegenzwischenbodenelement bzw. zum Zwischenbodenelement bewegliches Stützelement. Das Stützelement ist in der Horizontalposition der Gegenzwischenbodenvorrichtung bzw. der ersten Zwischenbodenvorrichtung in einer Stützposition anzuordnen, in der das Stützelement die Gegenzwischenbodenvorrichtung bzw. die erste Zwischenbodenvorrichtung auf dem Boden oder an der ersten oder weiteren Seitenwand abstützt. Eine Stützelementschwenkachse, um die das Stützelement bevorzugt relativ zum Gegenzwischenbodenelement bzw. zum ersten Zwischenbodenelement schwenkbeweglich ist, ist insbesondere parallel zur weiteren bzw. ersten Schwenkachse und/oder an einem von der weiteren bzw. ersten Schwenkachse abgewandten Ende des Gegenzwischenbodenelementes bzw. des ersten Zwischenbodenelementes angeordnet. Bei Betrachtung der Gegenzwischenbodenvorrichtung bzw. der ersten Zwischenbodenvorrichtung in die Rollrichtung ist das Stützelement bevorzugt länglich ausgebildet und kürzer als das Gegenzwischenbodenelement bzw. das ersten Zwischenbodenelement ausgebildet. Durch das Stützelement wird eine erhöhte Stabilität des Zwischenbodens erreicht, ohne dass es den Laderaum bei Anordnung der Gegenzwischenbodenvorrichtung in der Vertikalposition eingeschränkt.

Die Transportvorrichtung umfasst bevorzugt eine Gegenzwischenbodenvorrichtung pro Zwischenbodenvorrichtung. Die erste, zweite und/oder weitere Zwischenbodenvorrichtung sind/ist insbesondere frei von einem Stützelement. So wird vermieden, dass die Rolleinrichtung und das Stützelement um Bauraum konkurrieren müssen. Die zumindest eine Gegenzwischenbodenvorrichtung ist vorzugsweise derart ausgebildet, dass die erste, zweite und/oder weitere Zwischenbodenvorrichtung in der Horizontalposition bei Positionierung der Gegenzwischenbodenvorrichtung in der Horizontalposition auf der Gegenzwischenbodenvorrichtung aufliegen/t. Dabei stützt das Stützelement bevorzugt zumindest einen Teil der Zwischenbodenvorrichtung(en) mit ab. Alternativ die erste, zweite und/oder weitere Zwischenbodenvorrichtung vorzugsweise derart ausgebildet, dass die zumindest eine Gegenzwischenbodenvorrichtung in der Horizontalposition bei Positionierung der ersten Zwischenbodenvorrichtung in der Horizontalposition auf der ersten Zwischenbodenvorrichtung aufliegt. Dabei stützt das Stützelement bevorzugt zumindest einen Teil der Gegenzwischenbodenvorrichtung mit ab. Dabei bilden das Gegenzwischenbodenelement und das erste Zwischenbodenelement bevorzugt eine bündige von dem Boden abgewandte Oberfläche aus, wobei insbesondere zumindest ein Vorsprung des Zwischenbodenelementes auf zumindest einem Stützabschnitt des Gegenzwischenbodenelementes aufliegt. Indem die Stützwirkung des Stützelementes zusätzlich für die erste Zwischenbodenvorrichtung genutzt wird, wird die Stabilität des Zwischenbodens weiter erhöht. Dadurch, dass trotzdem keine der Zwischenbodenvorrichtungen bzw. Gegenzwischenbodenvorrichtungen sowohl eine Rolleinrichtung als auch ein Stützelement umfasst, lassen sich die Zwischenbodenvorrichtungen bzw. Gegenzwischenbodenvorrichtungen relativ klein ausbilden und nehmen nur einen minimalen Anteil des Laderaumes in Anspruch.

Weitere Einzelheiten und Vorteile der Erfindung sind den nachfolgend schematisch dargestellten Figuren zu entnehmen. Es zeigen:
- Fig. 1: eine erfindungsgemäße Transportvorrichtung bei Ausblendung einer weiteren Seitenwand, von Gegenzwischenbodenvorrichtungen einer Rückwand in einer perspektivischen Darstellung, wobei Zwischenbodenvorrichtungen in einer Horizontalposition angeordnet sind,
- Fig. 2: die Transportvorrichtung gemäß Fig. 1 bei Ausblendung der weiteren Seitenwand, der Gegenzwischenbodenvorrichtungen und der Rückwand einer weiteren perspektivischen Darstellung, wobei die Zwischenbodenvorrichtungen in einer Vertikalposition angeordnet sind,
- Fig. 3: die Transportvorrichtung gemäß Fig. 1 bei Ausblendung der Rückwand in einer weiteren perspektivischen Darstellung, wobei die Zwischenbodenvorrichtungen und die Gegenzwischenbodenvorrichtungen jeweils in Horizontalpositionen angeordnet sind,
- Fig. 4: eine Detaildarstellung einer der Zwischenbodenvorrichtungen der Transportvorrichtung gemäß Fig. 1.

Gleich oder ähnlich wirkende Teile der dargestellten Transportvorrichtung sind mit identischen Bezugsziffern versehen. Die beschriebenen Merkmale der Erfindung können auch anders als beschrieben oder mit den Figuren gezeigt zu erfindungsgemäßen Weiterbildungen kombiniert werden.

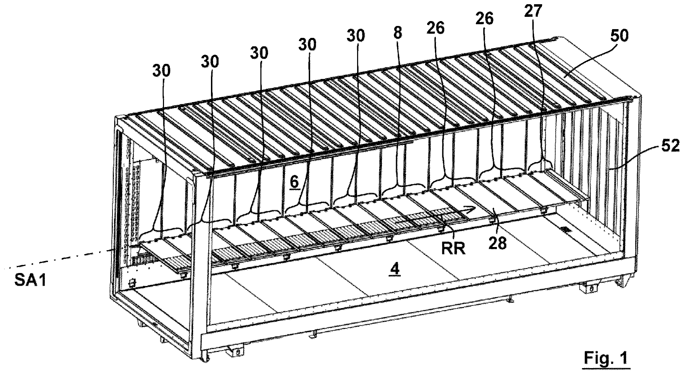

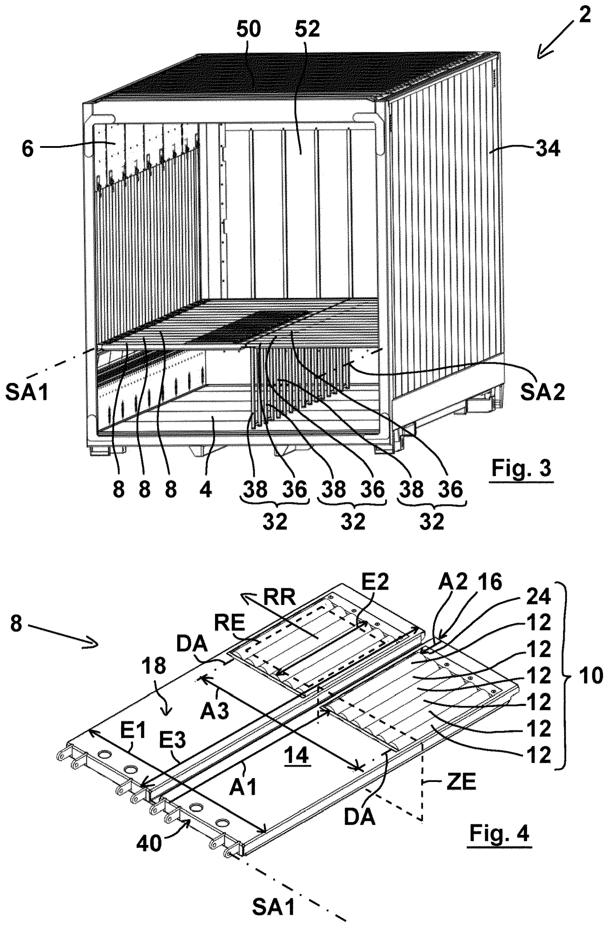

Von den Figuren gezeigt wird eine Transportvorrichtung 2 zum Transport von nicht dargestellten Paketen. Die Transportvorrichtung 2 weist einen Boden 4, eine erste Seitenwand 6, eine Frontwand 52 und ein Dach 50 auf (vgl. Fig. 1). Zusätzlich weist die Transportvorrichtung 2 eine der ersten Seitenwand 6 gegenüberliegende weitere Seitenwand 34 (vgl. Fig. 3) und eine nicht dargestellte und zu öffnende Rückwand gegenüber der Frontwand 52 auf.

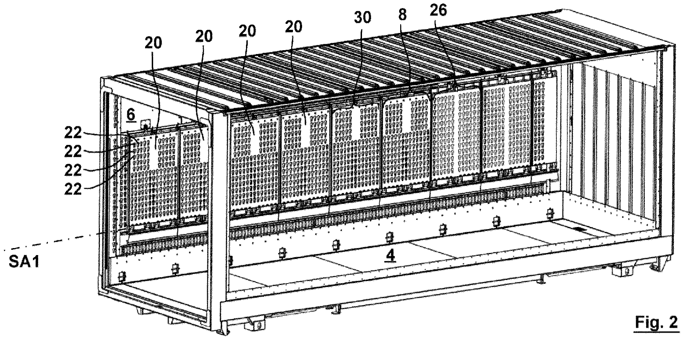

An der ersten Seitenwand 6 sind sechs gleichartig ausgebildete Zwischenbodenvorrichtungen 8, 30 angeordnet. Diese Zwischenbodenvorrichtungen 8, 30 sind relativ zur ersten Seitenwand 6 um 90° um eine erste Schwenkachse SA1 von einer Vertikalposition (vgl. Fig. 2) in eine Horizontalposition (vgl. Fig. 1) schwenkbeweglich. Die erste Schwenkachse SA1 ist dabei vom Boden 4 beabstandet.

Die Zwischenbodenvorrichtungen 8, 30 weisen jeweils ein Zwischenbodenelement 14 und eine Rolleinrichtung 10 auf (vgl. Fig. 4). Die Rolleinrichtung 10 umfasst mehrere um Drehachsen DA drehbar gelagerte und als Rollen ausgebildete Rollelemente 12. Die Rollelemente 12 dienen zu einer erleichterten Bewegung von Paketen in eine zu den Drehachsen DA in einer Draufsicht rechtwinklige Rollrichtung RR. Pro Zwischenbodenvorrichtung 8, 30 sind sechs der Rollelemente 12 der Rolleinrichtung 10 in einer ersten Ausnehmung des Zwischenbodenelementes 14 angeordnet und weitere sechs Rollelemente 12 der Rolleinrichtung 10 in einer zweiten Ausnehmung des Zwischenbodenelementes 14 angeordnet. Die Drehachsen DA der Rollelemente 12 sind dabei ortsfest zum Zwischenbodenelement 14 angeordnet.

Ein Abstand A2 der Rollelemente 12 von einem ersten Ende 16 des ersten Zwischenbodenelementes 14 ist deutlich kleiner als ein Abstand A1 der Rollelemente 12 von einem zweiten Ende 40 des ersten Zwischenbodenelementes 14. Die Abstände A1, A2 sind dabei als radial zur ersten Schwenkachse SA1 gemessen zu verstehen. Das erste Ende 16 ist von der ersten Schwenkachse SA1 abgewandt. Das zweite Ende 40 ist der ersten Schwenkachse SA1 zugewandt. Die Rollelemente 12 sind sämtlich zwischen einer Zwischenbodenmittelebene ZE und dem ersten Ende 16 angeordnet. Die Zwischenbodenmittelebene ZE erstreckt sich parallel zur ersten Schwenkachse SA1 und schneidet das erste Zwischenbodenelement 14 mittig zwischen dem ersten Ende 16 und dem zweiten Ende 40.

Die Drehachsen DA der äußersten Rollelemente 12 der Rolleinrichtung 10 haben einen Abstand A3 voneinander, der zumindest 90% einer Erstreckung E1 der ersten Zwischenbodenvorrichtung 8 in die Rollrichtung RR entspricht. Die Rollelemente 12 der Rolleinrichtung 10 haben eine parallel zu ihren Drehachsen DA gemessene Erstreckung E2. Die Erstreckung E2 entspricht höchstens 40% einer parallel zu den Drehachsen DA gemessenen Erstreckung E3 des ersten Zwischenbodenelementes 14. Eine in der Horizontalposition der Zwischenbodenvorrichtungen 8, 30 von dem Boden 4 abgewandte Oberfläche 18 der Zwischenbodenelemente 14 liegt unterhalb einer Rollebene RE. Die Rollebene RE berührt die Rollelemente 12 der Rolleinrichtung 10 an ihrer von dem Boden 4 abgewandten Seite, ohne dass die Rollelemente 12 von der Rollebene RE geschnitten werden.

Die Zwischenbodenvorrichtungen 8, 30 weisen jeweils ein Abdeckelement 20 auf, das sich in der Horizontalposition der Zwischenbodenvorrichtungen 8, 30 zwischen den Rolleinrichtungen 10 und dem Boden 4 erstreckt. Die Abdeckelemente 20 weisen jeweils eine Vielzahl von Ausnehmungen 22 auf, um nicht dargestellte Ladungssicherungselemente an den Zwischenbodenvorrichtungen 8, 30 anordnen zu können, zumindest wenn sie in der Vertikalposition angeordnet sind (vgl. Fig. 2).

Die Rolleinrichtungen 10 weisen zur Festlegung von je sechs ihrer Rollelemente 12 ein Befestigungselement 24 auf, das mit dem jeweiligen Zwischenbodenelement 14 auf einer von der ersten Schwenkachse SA1 abgewandten Seite der Rollelemente 12 verschraubt ist. Das jeweilige Zwischenbodenelement 14 bildet pro Rollelement 12 eine zum Befestigungselement 24 hin offene Lagerausnehmung aus, in der ein Achselement der Rollelemente 12 angeordnet ist. Die Figuren zeigen die Lagerausnehmungen und die Achselemente nicht.

Zwischen den vorbeschriebenen Zwischenbodenvorrichtungen 8, 30 und der Frontwand 52 weist die Transportvorrichtung drei weitere Zwischenbodenvorrichtungen 26, 27 auf, wovon zwei Zwischenbodenvorrichtungen 26 gleich ausgebildet sind. Die weiteren Zwischenbodenvorrichten 26, 27 sind ebenso wie die zuvor beschriebenen Zwischenbodenvorrichtungen 8, 30 um die erste Schwenkachse SA1 schwenkbeweglich und weisen jeweils ein Zwischenbodenelement 28 auf, sind jedoch frei von Rollelementen. Jeder der vorbeschriebene Zwischenbodenvorrichtungen 8, 26, 27, 30 liegt eine Gegenzwischenbodenvorrichtung 32 gegenüber, die an der weiteren Seitenwand 34 um eine weitere Schwenkachse SA2 schwenkbeweglich von einer Vertikalposition in eine in Fig. 3 dargestellte Horizontalposition schwenkbeweglich ist. Jede Gegenzwischenbodenvorrichtung 32 weist ein Gegenzwischenbodenelement 36 und ein Stützelement 38 auf. Das Stützelement 38 dient zur Abstützung sowohl der jeweiligen Gegenzwischenbodenvorrichtung 32 als auch der jeweiligen gegenüberliegenden Zwischenbodenvorrichtungen 8, 26, 27, 30, die auf dem Gegenzwischenbodenelement 36 aufliegt, auf den Boden 4.

## Patentansprüche

1. Transportvorrichtung (2) zum Transport von Paketen, aufweisend einen Boden (4), zumindest eine erste Seitenwand (6), an der zumindest eine erste Zwischenbodenvorrichtung (8) angeordnet ist, die relativ zur ersten Seitenwand (6) um eine vom Boden (4) beabstandete erste Schwenkachse (SA1) von einer Vertikalposition in eine Horizontalposition schwenkbeweglich ist und ein erstes Zwischenbodenelement (14) umfasst, und zumindest eine Rolleinrichtung (10), die mehrere relativ zum Boden (4) um Drehachsen (DA) drehbar gelagerte Rollelemente (12) zu einer Bewegung der Pakete in eine Rollrichtung (RR) umfasst, **dadurch gekennzeichnet, dass** die erste Zwischenbodenvorrichtung (8) die Rolleinrichtung (10) umfasst, sodass die Rolleinrichtung (10) als Teil der ersten Zwischenbodenvorrichtung (8) von der Vertikalposition in die Horizontalposition schwenkbeweglich ist.

2. Transportvorrichtung nach Anspruch 1, **dadurch gekennzeichnet, dass** die Rollelemente (12) als um die Drehachsen (DA) drehbar gelagerte Rollen ausgebildet sind.

3. Transportvorrichtung nach einem der vorhergehenden Ansprüche, **dadurch gekennzeichnet, dass** ein Abstand (A2) der Rollelemente (12) von einem von der ersten Schwenkachse (SA1) abgewandten ersten Ende (16) des ersten Zwischenbodenelementes (14) sich von einem Abstand (A1) der Rollelemente (12) von einem der ersten Schwenkachse (SA1) zugewandten zweiten Ende (40) des ersten Zwischenbodenelementes (14) unterscheidet.

4. Transportvorrichtung nach Anspruch 3, **dadurch gekennzeichnet, dass** die Rollelemente (12) vollständig zwischen einer zur ersten Schwenkachse (SA1) parallelen Zwischenbodenmittelebene (ZE), die das erste Zwischenbodenelement (14) mittig zwischen dem ersten Ende (16) und dem zweiten Ende (40) schneidet, und dem ersten Ende (16) oder dem zweiten Ende (40) angeordnet sind.

5. Transportvorrichtung nach einem der vorhergehenden Ansprüche, **dadurch gekennzeichnet, dass** die Drehachsen (DA) der bezogen auf die Rollrichtung (RR) äußersten Rollelemente (12) der Rolleinrichtung (10) einen Abstand (A3) voneinander haben, der zumindest 50 %, bevorzugt zumindest 70 %, besonders bevorzugt zumindest 90 % einer Erstreckung (E1) der ersten Zwischenbodenvorrichtung (8) in die Rollrichtung (RR) entspricht.

6. Transportvorrichtung nach einem der vorhergehenden Ansprüche, **dadurch gekennzeichnet, dass** eine Oberfläche (18) des ersten Zwischenbodenelementes (14), die in der Horizontalposition der ersten Zwischenbodenvorrichtung (8) von dem Boden (4) abgewandt ist, von einer die Rollelemente (12) an ihrer in der Horizontalposition der ersten Zwischenbodenvorrichtung (8) von dem Boden (4) abgewandten Seite berührenden Rollebene (RE) zumindest teilweise, insbesondere vollständig, beabstandet ist.

7. Transportvorrichtung nach einem der vorhergehenden Ansprüche, **dadurch gekennzeichnet, dass** die erste Zwischenbodenvorrichtung (8) ein Abdeckelement (20) aufweist, das sich in der Horizontalposition der ersten Zwischenbodenvorrichtung (8) zwischen der Rolleinrichtung (10) und dem Boden (4) erstreckt.

8. Transportvorrichtung nach Anspruch 7, **dadurch gekennzeichnet, dass** das Abdeckelement (20) insbesondere durchgängige Ausnehmungen (22) aufweist.

9. Transportvorrichtung nach einem der vorhergehenden Ansprüche, **dadurch gekennzeichnet, dass** zumindest eines der Rollelemente (12) der Rolleinrichtung (10) zumindest einen Rollenkörper und zumindest ein Achselement aufweist, das relativ zum Rollenkörper parallel zur Drehachse (DA) der Rollelemente (12), insbesondere gegen eine Federkraft, beweglich ausgebildet ist.

10. Transportvorrichtung nach einem der vorhergehenden Ansprüche, **dadurch gekennzeichnet, dass** zumindest eines der Rollelemente (12) der Rolleinrichtung (10) zumindest ein/das Achselement aufweist, das durch ein lösbar an dem ersten Zwischenbodenelement (14) festgelegtes Befestigungselement (24) relativ zum ersten Zwischenbodenelement (14) befestigt ist.

11. Transportvorrichtung nach Anspruch 10, **dadurch gekennzeichnet, dass** das erste Zwischenbodenelement (14) eine zum Befestigungselement (24) hin offene Lagerausnehmung ausbildet, in der das Achselement zumindest teilweise angeordnet ist.

12. Transportvorrichtung nach einem der vorhergehenden Ansprüche, **gekennzeichnet durch** zumindest eine zweite Zwischenbodenvorrichtung (26), die relativ zur ersten Seitenwand (6) um die erste Schwenkachse (SA1) schwenkbeweglich ist, ein zweites Zwischenbodenelement (28) umfasst, in die Rollrichtung (RR) versetzt zur ersten Zwischenbodenvorrichtung (8) angeordnet ist und frei von Rollelementen (12) ist.

13. Transportvorrichtung nach einem der vorhergehenden Ansprüche, **gekennzeichnet durch** eine weitere Zwischenbodenvorrichtung (30), die wie die erste Zwischenbodenvorrichtung (8) ausgebildet ist und um die erste Schwenkachse (SA1) von einer Vertikalposition in eine Horizontalposition schwenkbeweglich ist, wobei die Drehachse (DA) des der weiteren Zwischenbodenvorrichtung (30) nächstliegenden Rollelementes (12) der Rolleinrichtung (10) der ersten Zwischenbodenvorrichtung (8) von der Drehachse (DA) des der ersten Zwischenbodenvorrichtung (8) nächstliegenden Rollelementes (12) einer Rolleinrichtung (10) der weiteren Zwischenbodenvorrichtung (30) höchstens einen Abstand hat, der weniger als 50 %, bevorzugt weniger als 30 %, besonders bevorzugt weniger als 20 %, des Abstandes (A3) der Drehachsen (DA) der äußersten Rollelementes (12) der Rolleinrichtung (10) der ersten Zwischenbodenvorrichtung (8) entspricht.

14. Transportvorrichtung nach einem der vorhergehenden Ansprüche, **gekennzeichnet durch** eine Gegenzwischenbodenvorrichtung (32), die an einer der ersten Seitenwand (6) gegenüberliegenden weiteren Seitenwand (34) angeordnet ist, zu der die Gegenzwischenbodenvorrichtung (32) um eine weitere vom Boden (4) beabstandete Schwenkachse (SA2) von einer Vertikalposition in eine Horizontalposition schwenkbeweglich ist, und ein Gegenzwischenbodenelement (36) umfasst.

15. Transportvorrichtung nach Anspruch 14, **dadurch gekennzeichnet, dass** die Gegenzwischenbodenvorrichtung (32) ein relativ zum Gegenzwischenbodenelement (36) bewegliches Stützelement (38) umfasst, das in der Horizontalposition der Gegenzwischenbodenvorrichtung (32) in einer Stützposition anzuordnen ist, in der das Stützelement (38) die Gegenzwischenbodenvorrichtung (32) auf dem Boden (4) abstützt.

16. Transportvorrichtung nach Anspruch 15, **dadurch gekennzeichnet, dass** die Gegenzwischenbodenvorrichtung (32) derart ausgebildet ist, dass die erste Zwischenbodenvorrichtung (8) in der Horizontalposition bei Positionierung der Gegenzwischenbodenvorrichtung (32) in der Horizontalposition auf der Gegenzwischenbodenvorrichtung (32) aufliegt.
